# FASCICULE DE BREVET EUROPEEN

(11) **EP 0 997 622 B1**
(45) Date de publication et mention de la délivrance du brevet: **06.05.2004**
(21) Numéro de dépôt: 99402616.9
(22) Date de dépôt: 22.10.1999
(51) Int. Cl.: F02B 23/10, F02F 3/26

(54) **Moteur à combustion interne à allumage commandé et à injection directe comportant un piston perfectionné**
Fremdgezündete Brennkraftmaschine mit Direkteinspritzung und verbessertem Kolben
Spark ignited direct injection combustion engine with improved piston

(30) Priorité: 30.10.1998 FR 9813637
(43) Date de publication de la demande: 03.05.2000
(73) Titulaire: Renault s.a.s., 92100 Boulogne Billancourt (FR)
(72) Inventeur: Floch, Alain, 91460 Marcoussis (FR); Leboeuf, Régis, 91430 Igny (FR); Gastaldi, Patrick, 91190 Gif s/ Yvette (FR); Voisin, Christophe, 75018 Paris (FR)
(74) Mandataire: Srour, Elie

(56) Documents cités:
- EP-A- 0 694 682
- DE-A- 19 716 642
- US-A- 5 775 288

## Description

L'invention concerne un moteur à combustion interne à allumage commandé et à injection directe.

L'invention concerne plus particulièrement un moteur à combustion interne à allumage commandé et à injection directe, du type dans lequel un cylindre est délimité axialement vers le haut par une face inférieure d'une culasse dans laquelle débouchent, chacun par l'intermédiaire d'une soupape correspondante, au moins un conduit d'admission et au moins un conduit d'échappement, les soupapes d'admission et d'échappement étant agencées respectivement de part et d'autre d'un plan de référence contenant l'axe du cylindre et délimitant un côté admission d'un côté échappement du cylindre, du type dans lequel le cylindre est délimité axialement vers le bas par un piston dont une face supérieure comporte un évidement concave, et du type dans lequel au moins un des conduits d'admission est adapté pour créer dans le cylindre, au moins pour certaines phases de fonctionnement du moteur, un écoulement dit de "tumble" dans lequel les gaz contenus dans le cylindre sont animés d'un mouvement de rotation autour d'un axe perpendiculaire à l'axe du cylindre et parallèle au plan de référence, les gaz s'écoulant le long de la face supérieure du piston en se dirigeant transversalement du côté échappement vers le côté admission.

L'utilisation de l'injection directe, dans les moteurs à combustion interne et à allumage commandé, permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

Le mélange carburé qui résulte de l'injection du carburant dans le cylindre peut être un mélange homogène ou un mélange stratifié dans lequel le rapport air/carburant n'est pas constant dans tout le cylindre. Par exemple, on peut chercher à obtenir une plus forte concentration de carburant au voisinage de la bougie d'allumage pour faciliter le démarrage de la combustion.

On connaît différentes solutions qui permettent de réaliser des charges stratifiées grâce à l'injection directe.

Une première consiste à positionner l'injecteur et la bougie de telle manière que le jet de carburant est projeté directement par l'injecteur en direction de la bougie. Cette méthode est a priori très performante mais elle peut être sensible aux incertitudes de positionnement des différents éléments et, encore plus, à l'éventuel encrassement du nez d'injecteur qui peut modifier notablement les caractéristiques du jet de carburant.

Une seconde solution connue consiste à réaliser une stratification par effet de paroi en dirigeant le jet de carburant en direction d'une paroi, par exemple la face supérieure du piston, pour le diriger ensuite en direction de la bougie. Un moteur mettant en oeuvre cette solution est par exemple décrit dans le document EP-A-0.558.072. Toutefois, avec cette solution, il peut se produire une condensation importante du carburant sur les parois, le carburant ainsi condensé étant alors très difficilement inflammable.

L'invention a donc pour objet de proposer une solution globale quant à la géométrie et à l'implantation des éléments essentiels d'un moteur à combustion interne et à allumage commandé qui permette d'obtenir un fonctionnement optimal du moteur avec des charges "pauvres" stratifiées.

Dans ce but, l'invention propose un moteur du type décrit précédemment, caractérisé en ce que l'évidement concave est décalé du côté échappement tout en présentant une portion de paroi de fond qui est inclinée vers le bas en se dirigeant transversalement de l'échappement vers l'admission, le point bas de l'évidement étant agencé du côté admission, et en ce que l'évidement est délimité transversalement du côté admission par une portion de paroi sensiblement verticale formant déflecteur.

Selon d'autres caractéristiques de l'invention :
- la portion de paroi de fond présente la forme d'une bande sensiblement plane qui s'étend selon la direction transversale ;
- la distance entre le déflecteur et l'axe du cylindre est égale à au moins un tiers du rayon du cylindre ;
- la distance entre le déflecteur et l'axe du cylindre est égale au plus à trois quarts du rayon du cylindre ;
- le moteur comporte une bougie d'allumage qui est implantée dans la culasse de manière à déboucher dans le cylindre sensiblement au niveau de l'axe de celui-ci ;
- le moteur comporte un injecteur qui est implanté de manière à déboucher dans une partie radiale externe de la face inférieure de la culasse, du côté admission du cylindre, et de manière à injecter du carburant en direction de l'évidement ;
- l'évidement concave est délimité selon une direction longitudinale par deux parois latérales, et la dimension longitudinale de l'évidement diminue en se dirigeant transversalement du côté échappement vers le côté admission ;
- l'évidement concave est délimité selon une direction longitudinale par deux parois latérales, et au moins sur une partie de l'allongement transversal de l'évidement, la dimension longitudinale de l'évidement augmente en se dirigeant transversalement du côté échappement vers le côté admission ;
- l'évidement présente un contour de forme ovoïde ;
- la face inférieure de la culasse présente une forme de toit à deux pans inclinés qui sont délimités par une arête sommitale contenue dans le plan de référence, et la face supérieure du piston présente, autour de l'évidement concave, une forme sensiblement complémentaire de celle de la face inférieure de la culasse.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique et partielle en coupe axiale d'un moteur conforme aux enseignements de l'invention ;
- la figure 2 est une vue, de dessous selon l'axe du cylindre, de la face inférieure de la culasse du moteur de la figure 1 ;
- la figure 3 est une vue illustrant de manière plus précise, en section axiale, la forme de l'évidement du piston du moteur de la figure 1 ;
- les figures 5, 7 et 8 sont des vues schématiques en perspective illustrant différents modes de réalisation de la forme de la face supérieure du piston d'un moteur selon l'invention ;

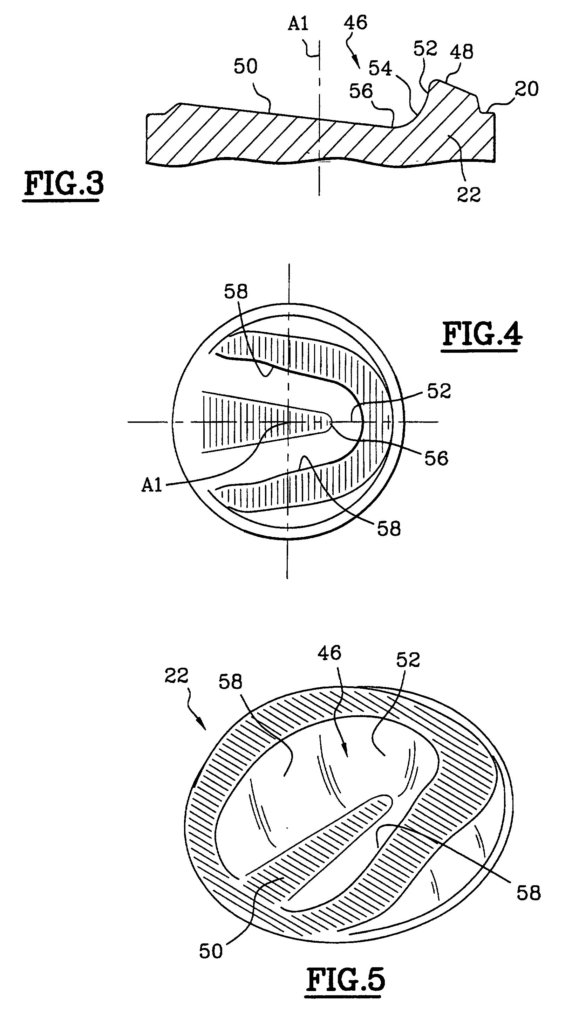

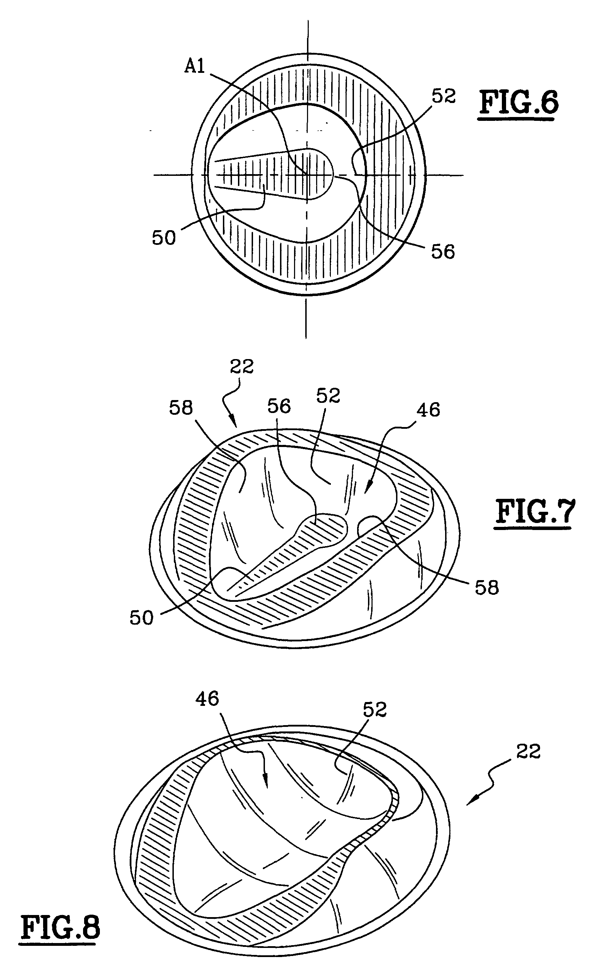

- les figures 4 et 6 sont des vues schématiques en vue de dessus des pistons des figures 5 et 7.

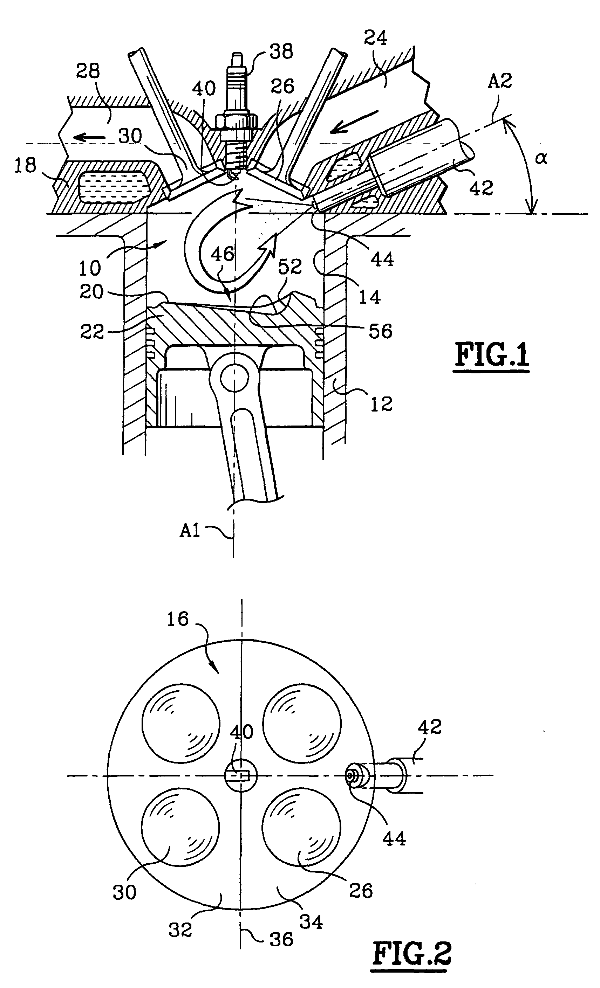

On a illustré sur la figure 1 un cylindre 10 d'un moteur à combustion interne à allumage commandé et à injection directe. Le cylindre 10, d'axe A1, est délimité dans un bloc-moteur 12 par une paroi cylindrique 14. Le cylindre 10 est délimité vers le haut par la face inférieure 16 d'une culasse 18 et, vers le bas, par la face supérieure 20 d'un piston 22 qui, de manière connue, est animé d'un mouvement alternatif de translation selon l'axe A1.

Deux conduits d'admission 24 d'air sont aménagés dans la culasse 18 de manière à déboucher dans la face inférieure 16 de celle-ci. La communication entre les conduits d'admission 24 et le cylindre 10 est autorisée ou interrompue par des soupapes d'admission commandées 26.

De la même manière, des conduits d'échappement 28 débouchent dans le cylindre 10 par l'intermédiaire de soupapes d'échappement 30.

Dans l'exemple de réalisation illustré sur les figures, la face inférieure 16 de la culasse 18 est configurée en « toit » de sorte qu'elle présente deux pans 32, 34 qui sont sensiblement plans et inclinés de part et d'autre d'une arête sommitale 36. Les conduits d'admission 24 débouchent dans l'un 34 des pans tandis que les conduits d'échappement 28 débouchent dans l'autre 32 des pans.

L'arête sommitale 36 et l'axe A1 du cylindre 10 déterminent ainsi un plan de référence qui délimite dans ce cylindre un côté admission et un côté échappement.

S'agissant d'un moteur à allumage commandé, une bougie d'allumage 38 est vissée dans la culasse 16 de telle sorte que ses électrodes 40 débouchent dans le cylindre 10, sensiblement sur l'axe A1 de celui-ci et donc au niveau de l'arête sommitale 36 de la face inférieure 16 de la culasse 18.

Par ailleurs, un injecteur 42 est implanté dans la culasse 18, entre les conduits d'admission 24 ou juste en dessous de ceux-ci, de manière qu'un nez 44 de l'injecteur 42 débouche dans le cylindre 10 pour pouvoir projeter directement à l'intérieur de celui-ci un jet de carburant.

Comme on peut le voir sur la figure 1, l'injecteur 42 débouche dans une partie périphérique de la face inférieure 16 de la culasse 18, c'est-à-dire une partie agencée radialement vers l'extérieur par rapport à l'axe A1 du cylindre.

L'injecteur 42 projette un jet de carburant sensiblement conique, l'axe du jet de carburant étant sensiblement confondu avec celui A2 de l'injecteur 42 qui forme par exemple un angle α d'environ 20 à 40° avec un plan perpendiculaire à l'axe A1 du cylindre 10. L'axe A2 de l'injecteur 42 est contenu dans un plan vertical transversal qui est celui de la figure 1, c'est-à-dire le plan perpendiculaire à l'arête sommitale 36.

Le cylindre 10 est muni d'au moins un conduit d'admission 24 qui comporte des moyens pour créer, au moins pour certaines phases de fonctionnement du moteur, un mouvement tourbillonnaire dit de « tumble » dans le cylindre 10. Ces moyens peuvent être constitués simplement par la forme du conduit d'admission 24 mais ils peuvent aussi être constitués par des moyens additionnels interposés dans le conduit d'admission, mobiles ou fixes, et susceptibles de perturber l'écoulement de l'air dans le conduit 24 pour que, à l'intérieur du cylindre 10, soit créé un écoulement tourbillonnaire qui, dans le plan perpendiculaire à l'arête sommitale 36, tourne autour d'un axe parallèle à cette arête 36, dans le sens anti-horaire lorsque l'on regarde le cylindre 10 de telle sorte que les soupapes d'admission sont à la droite et les soupapes d'échappement à la gauche. Ainsi, les gaz contenus dans le cylindre sont animés d'un mouvement tel qu'ils tendent à s'écouler le long de la face supérieure 20 du piston 22 en se dirigeant selon une direction transversale du côté échappement vers le côté admission.

Cet écoulement, compte tenu de son sens de rotation, sera appelé "tumble direct" dans la suite du texte.

Grâce au mouvement tourbillonnaire ainsi créé, illustré notamment sur la figure 1, le jet de carburant tend à être intercepté par des courants de gaz qui provoquent une accumulation de carburant au voisinage des électrodes 40 de la bougie 34. Il est possible de faire varier l'angle entre les deux mouvements, notamment en adaptant l'orientation de l'injecteur 42 par variation de l'angle α, de telle sorte que les deux mouvements s'opposent dans une plus ou moins grande mesure.

Ainsi, la stratification du mélange carburé est obtenue grâce à l'aérodynamique des gaz dans le cylindre 10, du fait de l'interception du carburant par les gaz en mouvement, en limitant le contact du carburant avec les parois du cylindre, c'est-à-dire en limitant les contacts avec la face supérieure 20 du piston 22 et avec la face latérale 14 du cylindre 10.

Pour obtenir un bon fonctionnement du moteur selon l'invention, il convient que le carburant soit injecté dans le cylindre avec une quantité de mouvement qui ne soit pas trop importante. Il faut en effet que la force de l'injection soit telle que le carburant puisse être dévié en direction de la bougie 38 avant d'arriver au contact du piston 22. Dans ce but, il sera préférable d'utiliser un injecteur 42 à pénétration réduite.

Selon l'invention, la face supérieure 20 du piston 22 comporte un évidement concave 46 qui permet de canaliser au mieux le mouvement tourbillonnaire de « tumble » des gaz contenus dans le cylindre, notamment lors du temps de compression lorsque le piston 22 remonte dans le cylindre 10 vers sa position de point mort haut. On notera que le jet de carburant projeté par l'injecteur 42 est dirigé sensiblement en direction de l'évidement concave 46 afin de pouvoir interagir avec le mouvement tourbillonnaire qui est canalisé par cet évidement.

Compte tenu du sens de rotation du mouvement tourbillonnaire de "tumble direct", cet évidement 46 est avantageusement décalé par rapport à l'axe A1 en direction du côté échappement du cylindre 10.

Comme on peut le voir sur les figures, la face supérieure 20 du piston 22 comporte par ailleurs, à l'aplomb de l'arête sommitale 36, autour de l'évidement concave 46, un bossage 48 qui est de forme sensiblement complémentaire de celle de la face inférieure 16 de la culasse 18, et qui permet notamment de limiter le volume résiduel du cylindre lorsque le piston 22 est au point mort haut, ceci afin d'obtenir un taux de compression adéquat des gaz.

On a représenté d'une part sur les figures 4 et 5 et d'autre part sur les figures 6 et 7 deux modes de réalisation d'un piston 22 qui permet, de par la forme de l'évidement concave 46, d'obtenir une aérodynamique interne des gaz dans le cylindre particulièrement favorable à l'obtention d'une bonne stratification du mélange carburé dans le cylindre.

Dans les deux cas, la face supérieure 20 du piston 22 présente, en section par un plan vertical transversal perpendiculaire à l'arête sommitale 36, un profil du type de celui qui est illustré en détail à la figure 3.

Comme on peut le voir sur cette figure, l'évidement 46 présente ainsi notamment une portion de paroi de fond 50 qui est sensiblement plane et inclinée vers le bas lorsque l'on se dirige selon la direction transversale du côté échappement vers le côté admission. La pente de cette paroi de fond 50 forme par exemple un angle d'environ 5 à 10 degrés par rapport au plan horizontal perpendiculaire à l'axe A1 du cylindre.

L'évidement 46 s'étend transversalement du côté échappement presque jusqu'à l'extrémité radiale externe du piston 22 et, à ce niveau, la paroi de fond 50 affleure sensiblement au même niveau que la paroi supérieure 20 du piston 22.

Au contraire, l'évidement concave 46 est délimité transversalement du côté de l'admission par une portion de paroi sensiblement verticale 52 qui s'étend perpendiculairement à la direction transversale pour former un déflecteur. Le déflecteur 52 est agencé transversalement du côté admission du cylindre, à une distance de l'axe A1 qui est de préférence comprise entre un tiers et trois-quarts du rayon de celui-ci. Comme on peut le voir sur la figure 3, la paroi de fond 50 et le déflecteur 52 sont raccordés l'un à l'autre par une zone de raccordement 54 courbe.

La zone de raccordement 54 s'étend depuis un point bas 56 de l'évidement concave 46 qui est agencé du côté admission du piston 22, à proximité du déflecteur 52. A titre d'exemple, pour un piston d'environ 80 mm de diamètre, on pourra prévoir que la profondeur de l'évidement 46, comprise entre le point bas 56 et le point le plus haut du déflecteur 52, soit approximativement de 7 à 15 mm. Dans l'exemple de réalisation illustré, le point bas 56 est décalé transversalement vers l'admission d'une distance correspondant sensiblement à la moitié du rayon du cylindre et le déflecteur 52 est agencé à une distance sensiblement égale à deux tiers du rayon par rapport à l'axe A1.

De par la configuration de l'évidement 46, on voit donc que les gaz, qui s'écoulent de l'échappement vers l'admission le long de la paroi supérieure 20 du piston 22, longent tout d'abord la paroi de fond 50 avant d'être défléchi verticalement vers le haut par le déflecteur 52, ceci de manière à favoriser et entretenir le mouvement de "tumble direct".

On peut voir sur les figures 4 et 6 que, dans les deux exemples de réalisation proposés, l'évidement 46 est globalement décalé transversalement vers l'échappement bien que son point le plus bas 56 soit décalé du côté de l'admission. En effet, sur les vues de dessus des figures 4 et 6, on voit que la superficie occupée par l'évidement 46 est répartie en majorité du côté de l'échappement et que, du côté échappement, l'évidement 46 s'étend transversalement sensiblement jusqu'à l'extrémité radiale externe du piston 22.

Les deux exemples de réalisation de l'invention qui sont illustrés sur les figures 4 à 7 diffèrent essentiellement par la forme de l'évidement 46 et, plus particulièrement, par la forme de l'évidement en vue de dessus. En effet, selon cette vue, on peut voir que l'évidement 46 est délimité selon une direction longitudinale parallèle à celle de l'arête sommitale 36 du cylindre par deux portions de paroi latérale 58 agencées symétriquement par rapport au plan vertical transversal du cylindre.

Dans le premier mode de réalisation illustré aux figures 4 et 5, les deux parois latérales 58 tendent à se rapprocher l'une de l'autre selon la direction longitudinale lorsque l'on se déplace de l'échappement vers l'admission. Ainsi, l'évidement 46 se trouve largement ouvert du côté de l'échappement, et il tend à se resserrer du côté de l'admission. De par cette configuration, on comprend que le volume délimité par une section longitudinale de l'évidement 46 diminue au fur et à mesure que l'on se déplace dans l'évidement 46 selon le sens d'écoulement des gaz dû au mouvement de "tumble direct". La diminution de cette section tend donc à favoriser une accélération des gaz qui s'écoulent dans l'évidement 46, ceux-ci arrivant donc au contact du déflecteur 52 avec une quantité de mouvement importante.

Au contraire, dans le mode de réalisation de l'invention qui est illustré aux figures 6 et 7, on peut voir que, au moins du côté échappement, les parois latérales 58 de l'évidement 46 tendent à s'écarter l'une de l'autre de sorte que, dans le sens d'écoulement des gaz dans l'évidement 46, la dimension de celui-ci selon la direction longitudinale tend à augmenter. Bien entendu, du côté de l'admission, les parois latérales 58 se rapprochent l'une de l'autre en étant conformées en arc de cercle pour, en se raccordant l'une à l'autre, former le déflecteur 52. La forme de cet évidement 46, dont le contour est sensiblement ovoïde, est plus particulièrement favorable à une propagation de la flamme lors de la combustion du mélange carburé.

On peut voir notamment sur les figures 4 et 6 que la paroi de fond 50 de l'évidement 46 est, dans les deux exemples de réalisation choisis, réalisée sous la forme d'une bande sensiblement plane, de faible largeur selon la direction longitudinale, et s'étendant depuis l'extrémité de l'évidement, côté échappement, jusqu'au point le plus bas 56. Les parois latérales 58 présentent en réalité, en section par un plan vertical longitudinal, une forme arrondie de manière à se raccorder avec la bande de fond 50.

Toutefois, comme cela est illustré à la figure 8, on peut aussi prévoir que le fond de l'évidement 46 soit dépourvu de cette bande plane, l'évidement 46 présentant alors, en section par un plan longitudinal vertical, sensiblement une forme d'arc de cercle.

Bien entendu, on pourra aussi prévoir que les parois latérales 58 de l'évidement 46 soient sensiblement parallèles l'une à l'autre, uniquement raccordées par un arrondi à leur extrémité côté admission avec le déflecteur 52.

## Revendications

1. Moteur à combustion interne à allumage commandé et à injection directe, du type dans lequel un cylindre (10) est délimité axialement vers le haut par une face inférieure (16) d'une culasse (18) dans laquelle débouchent, chacun par l'intermédiaire d'une soupape (26, 30) correspondante, au moins un conduit d'admission (24) et au moins un conduit d'échappement (28), les soupapes d'admission (24) et d'échappement (30) étant agencées respectivement de part et d'autre d'un plan de référence contenant l'axe (A1) du cylindre (10) et délimitant un côté admission d'un côté échappement du cylindre, du type dans lequel le cylindre est délimité axialement vers le bas par un piston (22) dont une face supérieure (20) comporte un évidement concave (46), et du type dans lequel au moins un des conduits d'admission (24) est adapté pour créer dans le cylindre, au moins pour certaines phases de fonctionnement du moteur, un écoulement dit de "tumble" dans lequel les gaz contenus dans le cylindre sont animés d'un mouvement de rotation autour d'un axe perpendiculaire à l'axe (A1) du cylindre et parallèle au plan de référence, les gaz s'écoulant le long de la face supérieure (20) du piston (22) en se dirigeant transversalement du côté échappement vers le côté admission,
**caractérisé en ce que** l'évidement concave (46) est décalé du côté échappement tout en présentant une portion de paroi de fond (50) qui est inclinée vers le bas en se dirigeant transversalement de l'échappement vers l'admission, le point bas (56) de l'évidement (46) étant agencé du côté admission, et **en ce que** l'évidement (46) est délimité transversalement du côté admission par une portion de paroi sensiblement verticale formant déflecteur (52).

2. Moteur selon la revendication 1, **caractérisé en ce que** la portion de paroi de fond (50) présente la forme d'une bande sensiblement plane qui s'étend selon la direction transversale.

3. Moteur selon l'une quelconque des revendications précédentes, **caractérisé en ce que** la distance entre le déflecteur (52) et l'axe (A1) du cylindre est égale à au moins un tiers du rayon du cylindre.

4. Moteur selon l'une quelconque des revendications précédentes, **caractérisé en ce que** la distance entre le déflecteur (52) et l'axe (A1) du cylindre est égale au plus à trois quarts du rayon du cylindre.

5. Moteur selon l'une quelconque des revendications précédentes, **caractérisé en ce qu'**il comporte une bougie d'allumage (38) qui est implantée dans la culasse (18) de manière à déboucher dans le cylindre (10) sensiblement au niveau de l'axe (A1) de celui-ci.

6. Moteur selon l'une quelconque des revendications précédentes, **caractérisé en ce qu'**il comporte un injecteur (42) qui est implanté de manière à déboucher dans une partie radiale externe de la face inférieure (16) de la culasse (18), du côté admission du cylindre, et de manière à injecter du carburant en direction de l'évidement (46).

7. Moteur selon l'une quelconque des revendications précédentes, **caractérisé en ce que** l'évidement concave (46) est délimité selon une direction longitudinale par deux parois latérales (58), et **en ce que** la dimension longitudinale de l'évidement (46) diminue en se dirigeant transversalement du côté échappement vers le côté admission.

8. Moteur selon l'une quelconque des revendications 1 à 6, **caractérisé en ce que** l'évidement concave (46) est délimité selon une direction longitudinale par deux parois latérales (58), et **en ce que**, au moins sur une partie de l'allongement transversal de l'évidement (46), la dimension longitudinale de l'évidement (46) augmente en se dirigeant transversalement du côté échappement vers le côté admission.

9. Moteur selon la revendication 8, **caractérisé en ce que** l'évidement (46) présente un contour de forme ovoïde.

10. Moteur selon l'une quelconque des revendications précédentes, **caractérisé en ce que** la face inférieure (16) de la culasse (18) présente une forme de toit à deux pans inclinés (32, 34) qui sont délimités par une arête sommitale (36) contenue dans le plan de référence, et **en ce que** la face supérieure (20) du piston (22) présente, autour de l'évidement concave (46), une forme sensiblement complémentaire de celle de la face inférieure (16) de la culasse (18).

## Claims

1. An internal combustion engine with controlled ignition and direct injection of the type in which a cylinder (10) is axially bounded at the top by a lower surface (16) of a cylinder head (18) with which at least one intake duct (24) and at least one exhaust duct (28) communicate, each via a corresponding valve (26, 30), the intake (24) and exhaust (30) valves being arranged respectively on either side of a reference plane containing the axis (A1) of the cylinder (10) and bounding an intake side from an exhaust side of the cylinder, of the type in which the cylinder is axially bounded at the bottom by a piston (22) whose upper surface (20) comprises a concave recess (46), and of the type in which at least one of the intake ducts (24) is adapted to create in the cylinder, at least for certain operating phases of the engine, a flow of the "tumble" type in which the gases contained in the cylinder are provided with a movement of rotation about an axis perpendicular to the axis (A1) of the cylinder and parallel to the reference plane, the gases flowing along the upper surface (20) of the piston (22) and moving transversely from the exhaust side to the intake side, **characterised in that** the concave recess (46) is offset from the exhaust side, while having a base wall portion (50) which is downwardly inclined and extends transversely from the exhaust to the intake, the base point (56) of the recess (46) being disposed on the intake side, and **in that** the recess (46) is bounded transversely on the intake side by a substantially vertical portion of wall forming a deflector (52).

2. An engine as claimed in claim 1, **characterised in that** the base wall portion (50) has the shape of a substantially plane band extending in the transverse direction.

3. An engine as claimed in any one of the preceding claims, **characterised in that** the distance between the deflector (52) and the axis (A1) of the cylinder is equal to at least one third of the radius of the cylinder.

4. An engine as claimed in any one of the preceding claims, **characterised in that** the distance between the deflector (52) and the axis (A1) of the cylinder is equal at most to three quarters of the radius of the cylinder.

5. An engine as claimed in any one of the preceding claims, **characterised in that** it comprises a spark plug (38) which is disposed in the cylinder head (18) so as to communicate with the cylinder (10) substantially at the level of its axis (A1).

6. An engine as claimed in any one of the preceding claims, **characterised in that** it comprises an injector (42) which is disposed so as to communicate with an outer radial portion of the lower surface (16) of the cylinder head (18), on the intake side of the cylinder, and so as to inject fuel in the direction of the recess (46).

7. An engine as claimed in any one of the preceding claims, **characterised in that** the concave recess (46) is bounded in a longitudinal direction by two lateral walls (58), and **in that** the longitudinal dimension of the recess (46) decreases as it moves transversely from the exhaust side to the intake side.

8. An engine as claimed in any one of claims 1 to 6, **characterised in that** the concave recess (46) is bounded in a longitudinal direction by two lateral walls (58), and **in that**, at least over a portion of the transverse elongation of the recess (46), the longitudinal dimension of the recess (46) increases as it moves transversely from the exhaust side to the intake side.

9. An engine as claimed in claim 8, **characterised in that** the recess (46) has a contour of ovoid shape.

10. An engine as claimed in any one of the preceding claims, **characterised in that** the lower surface (16) of the cylinder head (18) has the shape of a roof with two inclined sides (32, 34) which are bounded by a summit ridge (36) contained in the reference plane, and **in that** the upper surface (20) of the piston (22) comprises, about the concave recess (46), a shape substantially complementary to that of the lower surface (16) of the cylinder head (18).

## Patentansprüche

1. Verbrennungsmotor mit Fremdzündung und Direkteinspritzung, von dem Typ, in welchem ein Zylinder (10) axial nach oben hin begrenzt wird durch eine untere Seite (16) eines Zylinderkopfs (18), in welchen, jeweils über ein entsprechendes Ventil (26, 30), mindestens eine Einlassleitung (24) und mindestens eine Auslassleitung (28) münden, wobei die Ventile zum Einlass (24) und Auslass (30) jeweils auf beiden Seiten einer Referenzebene angeordnet sind, welche die Achse (A1) des Zylinders (10) enthält und eine Einlassseite von einer Auslassseite des Zylinders abgrenzt, von dem Typ, in welchem der Zylinder axial nach unten begrenzt wird durch einen Kolben (22), dessen obere Seite (20) eine konkave Aussparung (46) aufweist, und von dem Typ, in welchem mindestens eine der Einlassleitungen (24) angepasst ist, um in dem Zylinder, mindestens für bestimmte Phasen des Motorbetriebs, eine Strömung, "tumble" genannt, zu erzeugen, in welcher die in dem Zylinder enthaltenen Gase, in einer Bewegung der Rotation um eine Achse bewegt werden, die senkrecht zu der Achse (A1) des Zylinders und parallel zu der Referenzebene ist, wobei die Gase entlang der oberen Seite (20) des Kolbens (22) strömen, wobei sie sich transversal von der Auslassseite zu der Einlassseite richten,
**dadurch gekennzeichnet, dass** die konkave Aussparung (46) von der Auslassseite abgesetzt ist, während sie eine Bodenwandpartie (50) aufweist, welche nach unten geneigt ist, wobei sie sich von dem Auslass transversal zu dem Einlass richtet, wobei der Tiefpunkt (56) der Aussparung (46) auf der Einlassseite angeordnet ist, und dadurch, dass die Aussparung (46) transversal von der Einlassseite durch einen deutlich vertikalen Wandbereich begrenzt wird, welcher einen Deflektor (52) bildet.

2. Motor gemäß Anspruch 1, **dadurch gekennzeichnet, dass** der Bodenwandbereich (50) die Form eines deutlich ebenen Streifens aufweist, welcher sich entlang der transversalen Richtung erstreckt.

3. Motor gemäß einem der vorhergehenden Ansprüche, **dadurch gekennzeichnet, dass** der Abstand zwischen dem Deflektor (52) und der Achse (A1) des Zylinders gleich zu mindestens einem Drittel des Radius des Zylinders ist.

4. Motor gemäß einem der vorhergehenden Ansprüche, **dadurch gekennzeichnet, dass** der Abstand zwischen dem Detektor (52) und der Achse (A1) des Zylinders gleich zu drei vierteln des Radius des Zylinders ist.

5. Motor gemäß einem der vorhergehenden Ansprüche, **dadurch gekennzeichnet, dass** er eine Zündkerze (38) aufweist, welche in den Zylinderkopf (18) eingelassen ist, um in den Zylinder (10) zu münden, deutlich auf der Höhe der Achse (A1) desselben.

6. Motor gemäß einem der. vorhergehenden Ansprüche, **dadurch gekennzeichnet, dass** er einen Einspritzer (42) aufweist, welcher eingebaut ist, um in einen äußeren radialen Bereich der unteren Seite (16) des Zylinderkopfs (18) zu münden, auf der Einlassseite des Zylinders, und um Kraftstoff in Richtung der Aussparung (46) einzuspritzen.

7. Motor gemäß einem der vorhergehenden Ansprüche, **dadurch gekennzeichnet, dass** die konkave Aussparung (46) begrenzt wird entlang einer longitudinalen Richtung durch zwei Seitenwände (58) und dadurch, dass die longitudinale Dimension der Aussparung (46) geringer wird, wobei sie sich transversal von der Auslassseite zu der Einlassseite richtet.

8. Motor gemäß einem der Ansprüche 1 bis 6, **dadurch gekennzeichnet, dass** die konkave Aussparung (46) begrenzt wird entlang einer longitudinalen Richtung durch zwei Seitenwände (58), und dadurch, dass mindestens auf einem Teil der transversalen Verlängerung der Aussparung (46) sich die longitudinale Dimension der Aussparung (46) erhöht, wobei sie sich transversal von der Auslassseite zu der Einlassseite richtet.

9. Motor gemäß Anspruch 8, **dadurch gekennzeichnet, dass** die Aussparung (46) einen eiförmigen Umriss aufweist.

10. Motor gemäß einem der vorhergehenden Ansprüche, **dadurch gekennzeichnet, dass** die untere Seite (16) des Zylinderkopfs (18) die Form eines Dachs mit zwei geneigten Schrägen (32, 34) aufweist, welche durch eine Gipfelkante (36) begrenzt werden, die in der Referenzebene enthalten ist, und dadurch, dass die obere Seite (20) des Kolbens (22) um die konkave Aussparung (46) eine Form aufweist, die deutlich komplementär zu derjenigen der unteren Seite (16) des Zylinderkopfes (18) ist.
